# FASCICULE DE BREVET EUROPEEN

(11) **EP 1 610 527 B1**
(45) Date de publication et mention de la délivrance du brevet: **17.10.2007**
(21) Numéro de dépôt: 05300405.7
(22) Date de dépôt: 24.05.2005
(51) Int. Cl.: H04L 29/06

(54) **Procédé de génération d'une table de serveurs disponibles**
Mehod for generating a table of available servers.
Verfahren zum Erzeugen einer Tabelle von verfügbaren Servern.

(30) Priorité: 25.06.2004 FR 0406979
(43) Date de publication de la demande: 28.12.2005
(73) Titulaire: FRANCE TELECOM, 75015 Paris (FR)
(72) Inventeur: NEVEUX, Didier, 22140, CAVAN (FR); LE QUEAU, Hélène, 22300, LANNION (FR); LE CLERC, Philippe, 22300, LANNION (FR); GOURIOU, Alain, 22560, TREBEURDEN (FR)
(74) Mandataire: Lapoux, Roland

(56) Documents cités:
- EP-A- 1 385 314
- US-A1- 2002 032 777
- US-A1- 2002 042 823
- US-A1- 2002 194 342
- US-B1- 6 571 288

## Description

La présente invention concerne une génération d'une table d'identificateurs de serveur de traitement disponibles pour qu'un équipement puisse sélectionner un serveur disponible à affecter au traitement d'une requête d'un terminal. Plus généralement, l'invention est développée dans le contexte de la répartition de trafic constitué par des requêtes de terminaux vers des serveurs.

Dans l'état de la technique, les répartitions de charge de trafic entre des serveurs de traitement sont réalisées par des algorithmes de répartition complexes exécutés depuis des équipements d'aiguillage. Les équipements d'aiguillage sont considérablement sollicités par ces algorithmes, ce qui diminue les performances d'aiguillage des équipements.

La charge des serveurs de traitement est généralement prise en compte au travers du nombre de requêtes, indépendamment de la charge induite par chaque requête.

Les adresses des serveurs de traitement doivent être connues des équipements d'aiguillage, et la mise à jour de ces adresses dans les équipements d'aiguillage n'est pas aisée.

Un équipement d'aiguillage peut transmettre en fonction d'un algorithme de répartition un nombre important de requêtes successives à un seul serveur de traitement sans considération de conséquences sur le serveur de traitement, telles que la saturation rapide de celui-ci.

De plus, un équipement d'aiguillage est généralement un point d'entrée unique d'un ensemble de serveurs de traitement.

La demande de brevet US 2002/042823 divulgue un système de gestion de serveurs web comprenant un administrateur et un intercepteur pour diriger des requêtes de page web d'usagers vers des serveurs web disponibles. L'administrateur reçoit des informations concernant la disponibilité et la charge de serveurs web depuis des agents en communication avec les serveurs web et transmet ces informations à l'intercepteur. L'intercepteur reçoit en outre des requêtes d'usagers et redirige ces dernières vers des serveurs web en fonction d'un algorithme dépendant desdites informations. L'intercepteur est donc considérablement sollicité pour exécuter cet algorithme et trouver par lui-même une répartition efficace de charge de trafic, ce qui prive l'intercepteur de ressources pour la répartition des requêtes.

La demande de brevet US 2002/032777 concerne un répartiteur de charge qui distribue des requêtes de service provenant de terminaux clients à des serveurs par l'intermédiaire du réseau internet. A chaque requête de service, le répartiteur estime une valeur de charge de serveur pour traiter la requête en fonction des contenus de la requête et d'une table d'estimation de charge. La répartition de charge entre les terminaux et les serveurs est réalisée par une seule entité constituée par le répartiteur qui est fortement sollicité pour toutes les opérations aboutissant à la distribution des requêtes de service, ce qui diminue les performances propres d'aiguillage des requêtes dans le répartiteur.

La présente invention a pour **objectif** de remédier aux inconvénients précités en mettant à disposition permanente d'un équipement d'aiguillage une table de serveurs de traitement disponibles mise à jour automatiquement en continu.

Pour atteindre cet objectif, un procédé de génération d'une table de serveurs de traitement disponibles parmi un ensemble de serveurs de traitement afin qu'un équipement puisse communiquer des requêtes de terminaux à des serveurs de traitement disponibles à travers un réseau de télécommunications, est caractérisé en ce qu'il comprend les étapes suivantes dans un serveur de disponibilité :
une interrogation d'une base de données afin d'actualiser une liste mémorisée de serveurs de traitement comprenant notamment au moins un état de disponibilité d'un serveur de traitement associé à un identificateur de serveur de traitement, et
une sélection d'au moins un identificateur dans la liste afin de générer la table de serveurs disponibles comprenant au moins un identificateur identifiant un serveur de traitement disponible auquel l'équipement communique les requêtes.

De préférence, la sélection d'identificateur dans la liste peut être réalisée par des tirages aléatoires d'identificateurs dans la liste pondérés par les états de disponibilité associés aux identificateurs.

Les identificateurs de serveur de traitement tirés aléatoirement peuvent être classés dans la table de serveurs disponibles par différences croissantes entre les états de disponibilité associés et une valeur prédéterminée afin que l'équipement communique les requêtes successivement aux serveurs de traitement disponibles selon leurs identificateurs classés.

La génération de la table de serveurs disponibles peut être périodique et/ou asynchrone de la périodicité de l'interrogation de la base de données.

La génération de la table de serveurs disponibles peut être continue.

La table de serveurs disponibles peut être en outre générée lorsque la liste mémorisée des serveurs de traitement est actualisée.

L'état de disponibilité d'un serveur de traitement peut être déterminé selon des caractéristiques de fonctionnement du serveur de traitement.

Un sondeur associé à un serveur de traitement peut déterminer l'état de disponibilité en fonction des caractéristiques de fonctionnement du serveur de traitement et transmettre à la base de données l'état de disponibilité déterminé du serveur de traitement.

L'état de disponibilité d'un serveur de traitement peut être actualisé en fonction d'une durée d'actualisation déterminée selon des critères d'actualisation du serveur de traitement.

La liste mémorisée des serveurs de traitement peut être actualisée selon une date d'actualisation correspondant à la date de la prochaine actualisation de l'état de disponibilité de l'un des serveurs de traitement, déduite de la durée d'actualisation prédéterminée dudit serveur de traitement.

L'invention concerne également un serveur de disponibilité pour générer une table de serveurs de traitement disponibles parmi un ensemble de serveurs de traitement afin qu'un équipement puisse communiquer des requêtes de terminaux à des serveurs de traitement disponibles à travers un réseau de télécommunications. Le serveur de disponibilité est caractérisé en ce qu'il comprend :
un moyen pour interroger une base de données afin d'actualiser une liste mémorisée de serveurs de traitement comprenant notamment au moins un état de disponibilité d'un serveur de traitement associé à un identificateur de serveur de traitement, et
un moyen pour sélectionner au moins un identificateur dans la liste mémorisée afin qu'un moyen pour générer génère la table de serveurs disponibles comprenant au moins un identificateur identifiant un serveur de traitement disponible auquel l'équipement communique les requêtes.

De préférence, le moyen pour sélectionner peut réaliser au moins un tirage aléatoire d'au moins un identificateur dans la liste, pondéré par les états de disponibilité associés aux identificateurs.

Enfin, l'invention se rapporte à un programme d'ordinateur apte à être mis en oeuvre dans un serveur de disponibilité pour générer une table de serveurs de traitement disponibles parmi un ensemble de serveurs de traitement afin qu'un équipement puisse communiquer des requêtes de terminaux à des serveurs de traitement disponibles à travers un réseau de télécommunications, ledit programme comprenant des instructions qui, lorsque le programme est chargé et exécuté sur ledit serveur, réalisent les étapes selon le procédé de l'invention.

D'autres caractéristiques et avantages de la présente invention apparaîtront plus clairement à la lecture de la description suivante de plusieurs réalisations préférées de l'invention, données à titre d'exemples non limitatifs, en référence aux **dessins** annexés correspondants dans lesquels :
- la figure 1 est un bloc-diagramme schématique d'un système de sélection de serveur de traitement incluant un serveur de disponibilité pour générer une table de serveurs de traitement disponibles selon l'invention ;
- la figure 2 est un algorithme d'un procédé asynchrone de détermination et d'actualisation d'un état de disponibilité d'un serveur de traitement intervenant préalablement à un procédé de génération de table de serveurs disponibles selon l'invention ; et
- la figure 3 est un algorithme d'un procédé asynchrone de génération de table de serveurs de traitement disponibles selon l'invention.

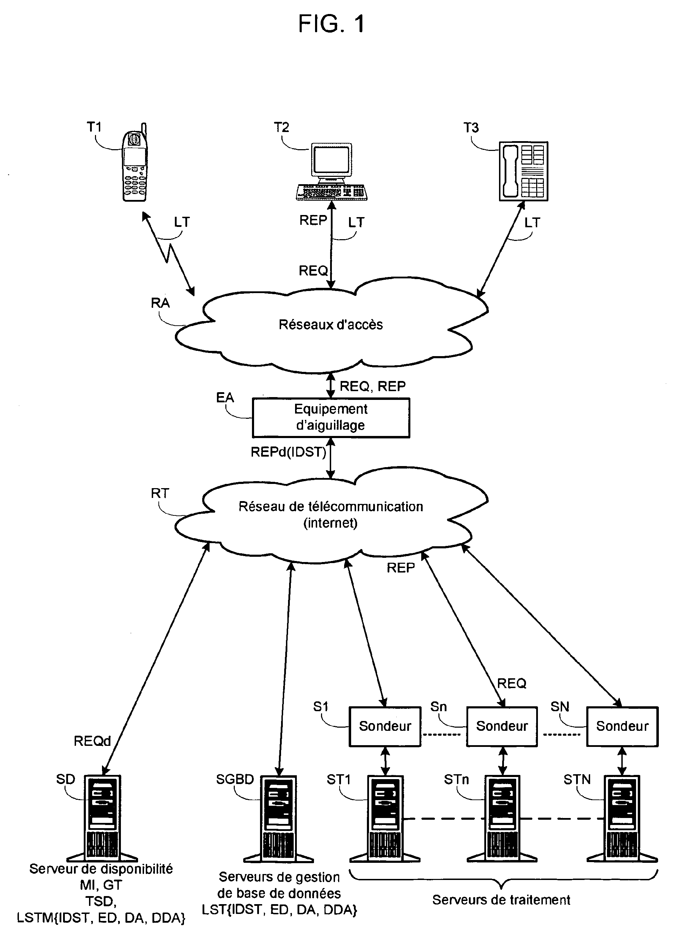

En référence à la figure 1, le système de sélection comprend principalement au moins un équipement d'aiguillage EA, au moins un serveur de disponibilité SD, au moins un serveur de gestion de base de données SGBD, au moins un ensemble de serveurs de traitement ST1 à STN associés respectivement à des sondeurs S1 à SN, et au moins un terminal T. Dans la figure 1, on n'a représenté seulement trois terminaux d'usager T1, T2 et T3 désignés indifféremment par T dans la suite de la description.

**Le terminal T** requiert, dans le cadre de l'invention, un service auprès de l'équipement d'aiguillage EA qui retransmet la requête d'usager REQ à un serveur de traitement ST.

Le terminal T est relié à un réseau d'accès respectif RA par une liaison LT. Le terminal T est par exemple un terminal de radiocommunications mobile T1, la liaison LT est un canal de radiocommunications, et le réseau d'accès respectif RA comprend le réseau fixe d'un réseau de radiocommunications cellulaire, par exemple de type GSM (Global System for Mobile communications) avec un service GPRS (General Packet Radio Service), ou de type UMTS (Universal Mobile Telecommunications System).

Selon un autre exemple, le terminal T est un ordinateur personnel T2, relié directement par modem à la liaison LT de type ligne xDSL ou RNIS (Réseau Numérique à Intégration de Services) reliée au réseau d'accès RA correspondant.

Selon un autre exemple, le terminal T est un terminal fixe de télécommunications T3, la liaison LT est une ligne téléphonique et le réseau d'accès respectif RA comprend le réseau téléphonique commuté.

Selon d'autres exemples, le terminal d'usager T comprend un dispositif ou objet électronique de télécommunications personnel à l'usager qui peut être un assistant numérique personnel communiquant PDA. Le terminal T peut être tout autre terminal domestique portable ou non tel qu'une console de jeux vidéo, ou un récepteur de télévision intelligent coopérant avec une télécommande à afficheur ou un clavier alphanumérique servant également de souris à travers une liaison infrarouge.

Selon un autre exemple, le réseau d'accès RA comprend un réseau de raccordement de plusieurs terminaux d'usager.

Les terminaux d'usager T et les réseaux d'accès RA ne sont pas limités aux exemples ci-dessus et peuvent être constitués par d'autres terminaux et réseaux d'accès connus.

Dans la suite de la description, des caractéristiques de fonctionnement CF d'un serveur de traitement ST1 à STN sont des informations telles qu'une charge, un nombre de ports utilisés, un nombre de requêtes traitées, une capacité maximale de traitement de requête, un facteur lié au temps de transmission du réseau auquel est connecté le serveur, un facteur lié au temps de traitement d'une requête, etc. Les caractéristiques de fonctionnement CF, telles que la caractéristique de charge, sont susceptibles de varier dans le temps.

**L'équipement d'aiguillage** EA communique avec le serveur de disponibilité SD et les serveurs de traitement ST1 à STN à travers un réseau de télécommunications RT de type internet. Le serveur de gestion de base de données SGBD communique avec le serveur de disponibilité SD et les sondeurs S1 à SN. Le terminal T communique avec l'équipement d'aiguillage EA à travers le réseau d'accès respectif RA.

L'équipement d'aiguillage EA est situé de préférence près des terminaux T afin d'éviter la saturation de l'équipement d'aiguillage EA. Par exemple, l'équipement d'aiguillage EA est installé au niveau d'une unité de raccordement de ligne d'usager d'un réseau téléphonique, ou au niveau d'un serveur de type BAS (Broadband Access Server) pour une ligne ADSL (Asynchronous Digital Subscriber Line).

A la réception de la requête d'usager REQ, l'équipement d'aiguillage EA transmet au serveur de disponibilité SD une requête de disponibilité REQd. Le serveur de disponibilité SD transmet à l'équipement d'aiguillage EA une réponse REPd comprenant un identificateur IDST d'un serveur de traitement disponible pour traiter la requête d'usager REQ. L'équipement d'aiguillage EA transmet la requête d'usager au serveur de traitement disponible.

Dans une variante, l'équipement d'aiguillage EA transmet au terminal d'usager T un identificateur IDST et/ou une adresse d'un serveur de traitement disponible pour que le terminal transmette directement sa requête au serveur de traitement disponible.

Chaque **sondeur** Sn, avec 1 ≤ n ≤ N, est spécifique au serveur de traitement STn auquel il est associé. Chaque sondeur Sn fonctionne indépendamment des autres sondeurs.

Le sondeur Sn détermine un état de disponibilité ED du serveur de traitement associé STn en fonction des caractéristiques de fonctionnement CF du serveur de traitement.

L'état de disponibilité ED est une représentation de l'ensemble des caractéristiques de fonctionnement CF du serveur de traitement à un instant variable. Par exemple, l'état de disponibilité est égal à "1" lorsque le serveur de traitement est inoccupé et par conséquent totalement disponible ; l'état de disponibilité est égal à "0" lorsque le serveur de traitement est totalement indisponible ; un état de disponibilité intermédiaire par exemple égal à 0,6 signifie que le serveur de traitement est occupé mais qu'il peut encore traiter des requêtes dans une proportion de 40% de sa capacité de traitement. Par exemple, l'état de disponibilité d'un premier serveur de traitement ayant les mêmes caractéristiques de fonctionnement à l'exception de caractéristiques physiques plus élevées qu'un deuxième serveur de traitement est plus grand que l'état de disponibilité du deuxième serveur de traitement.

Le sondeur Sn actualise l'état de disponibilité ED du serveur de traitement associé STn à des dates successives séparées par une durée d'actualisation variable DA spécifique au serveur de traitement. Une deuxième date d'actualisation de l'état de disponibilité ED du serveur de traitement associé, succédant de la durée d'actualisation variable DA à une première date d'actualisation est déterminée par le sondeur en fonction de critère(s) d'actualisation. La durée d'actualisation DA est ainsi déterminée en fonction d'un ou plusieurs critères d'actualisation du serveur de traitement associé chaque fois que l'état de disponibilité ED est déterminé.

Par exemple, un critère d'actualisation est une fréquence de variation d'une caractéristique de fonctionnement du serveur de traitement associé. Un autre critère d'actualisation est l'écart entre une caractéristique de fonctionnement et un seuil de la caractéristique de fonctionnement. Le seuil de charge du serveur de traitement associé de charge étant de 100%, les conséquences d'une hausse de charge de 10% ne sont pas les même lorsqu'au premier instant la charge du serveur est de 95% au lieu de 20%. Selon encore un autre exemple, un critère d'actualisation dépend d'une caractéristique de fonctionnement, telle que la capacité maximale de traitement de requête ou le facteur lié au temps de transmission. En effet, plus la capacité de traitement d'un serveur de traitement est faible et plus l'impact d'une augmentation de trafic sur ce serveur est important, ce qui nécessite de déterminer plus souvent l'état de disponibilité ED. Plus le facteur lié au temps de transmission d'un serveur de traitement ou au temps de traitement d'une requête est élevé et plus l'impact d'une augmentation du facteur est important, ce qui nécessite également de déterminer plus souvent l'état de disponibilité ED.

Le sondeur Sn transmet au serveur de gestion de base de données SGBD l'état de disponibilité déterminé ED du serveur de traitement associé STn, une date de dernière actualisation DDA et la durée d'actualisation DA en association à l'identificateur IDST du serveur de traitement associé pour que le serveur SGBD les mémorise. La date de dernière actualisation DDA est la date à laquelle le sondeur a déterminé pour la dernière fois l'état de disponibilité ED du serveur de traitement associé. Le sondeur Sn mémorise l'état de disponibilité ED déterminé, la date de dernière actualisation DDA et la durée d'actualisation DA.

Dans une variante, le sondeur Sn ne transmet au serveur de gestion SGBD que l'état de disponibilité ED et une date d'actualisation déterminée en fonction de la date de dernière actualisation DDA et de la durée d'actualisation DA.

Le sondeur Sn vérifie périodiquement, par exemple toutes les secondes, si l'état de disponibilité ED doit être actualisé en comparant la durée écoulée depuis la date de dernière actualisation DDA à la durée d'actualisation DA. Lorsque la durée écoulée est inférieure à la durée d'actualisation DDA, le sondeur n'actualise pas l'état de disponibilité ED du serveur de traitement associé STn. Lorsque la durée écoulée est égale ou supérieure à la durée d'actualisation, le sondeur actualise l'état de disponibilité ED du serveur de traitement associé, c'est-à-dire détermine l'état de disponibilité ED en fonction des caractéristiques de fonctionnement, qui ont pu changer depuis la dernière détermination de l'état de disponibilité, détermine la prochaine durée d'actualisation DA de l'état de disponibilité nouvellement déterminé et mémorise l'état de disponibilité déterminé, la prochaine durée d'actualisation, et la date de dernière actualisation DDA dans le serveur SGBD.

Dans une variante, le sondeur Sn actualise l'état de disponibilité ED lorsqu'une caractéristique de fonctionnement CF varie d'un pourcentage prédéterminé ou atteint un seuil limite prédéterminé. Par conséquent, cette variante prend en compte des pannes ou des mises hors service pour maintenance de serveurs de traitement. Cette variante peut être combinée à la réalisation principale.

Des couples d'état de disponibilité et de durée d'actualisation sont actualisés et mémorisés indépendamment les uns des autres respectivement pour les serveurs de traitement ST1 à STN dans le serveur de gestion de base de données SGBD.

Dans une variante, le sondeur Sn n'est pas un équipement externe au serveur de traitement associé STn, mais un module logiciel dans le serveur de traitement. Le serveur de gestion de base de données SGBD communique alors avec le sondeur Sn associé au serveur de traitement à travers le réseau RT.

Dans une autre variante, un module de surveillance relié aux sondeurs surveille l'expiration de la durée d'actualisation de l'état de disponibilité dans la base de données du serveur SGBD et transmet éventuellement un ordre d'actualisation de l'état de disponibilité au sondeur associé au serveur de traitement dont l'état de disponibilité n'a pas été actualisé.

Le **serveur de disponibilité** SD est un serveur standard, par exemple un serveur web. Il ne communique jamais directement avec un serveur de traitement. Il comprend notamment un module d'interrogation de base de données MI et un générateur de table GT.

Le module d'interrogation MI interroge périodiquement le serveur de gestion de base de données SGBD pour que celui-ci transmette au serveur de disponibilité SD une liste de serveurs de traitement LST comprenant les identificateurs IDST de tous les serveurs de traitement ST1 à STN, ainsi que les états de disponibilité ED, les dates de dernière actualisation DDA et les durées d'actualisation DA associés aux identificateurs IDST. La liste de serveurs de traitement LST est mémorisée dans le serveur de disponibilité SD en une liste de serveurs de traitement mémorisée LSTM.

En variante, le serveur de disponibilité SD surveille l'actualisation des états de disponibilité ED dans la liste de serveurs LST et actualise sa propre liste de serveurs de traitement mémorisée LSTM en dépendance des serveurs de traitement dont les états de disponibilité ED ont été actualisés depuis la dernière interrogation du serveur SGBD.

Le générateur de table GT mémorise et génère périodiquement ou en continu une table de serveurs de traitement disponibles TSD résultant d'une sélection de plusieurs identificateurs dans la liste de serveurs mémorisée LSTM par un tirage aléatoire ou selon un critère de sélection. Un critère de sélection est par exemple lorsqu'un état de disponibilité associé à un identificateur dépasse un seuil. La périodicité de la génération de la table TSD est asynchrone de la périodicité de l'interrogation du serveur de gestion de base de données SGBD et de préférence inférieure à la périodicité d'interrogation.

La table de serveurs disponibles TSD comprend une liste d'identificateurs de serveur de traitement IDST et peut être générée selon l'algorithme suivant dans le serveur SD.

Dans un premier exemple, les identificateurs des serveurs de traitement dont les états de disponibilité ED sont supérieurs à un seuil d'état de disponibilité non nul, par exemple égal à 0,4 environ, sont d'abord prélevés de la dernière liste mémorisée LSTM récupérée lors de la dernière interrogation du serveur SGBD. Un nombre prédéterminé d'identificateurs de serveur de traitement est tiré aléatoirement parmi tous ceux prélevés de la table. Le nombre prédéterminé d'identificateurs définit la taille de la table TSD. Le tirage aléatoire est pondéré par les états de disponibilité des serveurs de traitement dont les identificateurs ont été tirés aléatoirement ; par exemple les identificateurs de serveur de traitement tirés aléatoirement sont classés dans la table TSD par différences croissantes entre les états de disponibilité associés ED et une valeur prédéterminée, par exemple égal à 0,7 environ. Le serveur SD transmet à l'équipement EA les identificateurs ainsi classés au fur à mesure des requêtes reçues REQd afin que l'équipement communique des requêtes d'usager REQ à traiter aux serveurs de traitement disponibles identifiés par les identificateurs classés, jusqu'à la prochaine génération de la table TSD. Ainsi en général, l'identificateur d'un serveur de traitement dont l'état de disponibilité ED est élevé apparaît plus souvent dans la table TSD qu'un serveur dont l'état de disponibilité est beaucoup moins élevé. Les tirages aléatoires successifs dans le serveur de disponibilité SD sont indépendants les uns des autres. Selon une réalisation, la table TSD fonctionne comme une pile FIFO ("First In First Out") qui peut être générée également à chaque actualisation des états de disponibilité ED lors de chaque interrogation; les premiers identificateurs de serveur de traitement IDST au sommet de la pile sont ceux sélectionnés en premier.

Dans un deuxième exemple, le serveur de disponibilité SD détermine le nombre total d'identificateurs de la dernière liste mémorisée LSTM récupérée lors de la dernière interrogation du serveur SGBD. Le serveur de disponibilité SD lit la liste mémorisée LSTM et affecte successivement à chaque identificateur de serveur de traitement un intervalle de disponibilité dont la borne inférieure est égale à la somme des états de disponibilités lus précédemment et la largeur égale à l'état de disponibilité associé à l'identificateur. La somme de tous les états de disponibilité associés aux identificateurs est appelée limite de tirage. La limite de tirage dépend directement du nombre d'identificateurs dans la liste mémorisée LSTM et des états de disponibilité ED. Le serveur de disponibilité tire aléatoirement et successivement des nombres compris entre 0 et la limite de tirage. Le serveur de disponibilité SD détermine l'identificateur du serveur de traitement IDST associé dont l'intervalle de disponibilité comprend le nombre tiré aléatoirement. Le serveur de disponibilité SD constitue la table des serveurs de traitement disponibles TSD avec les identificateurs déterminés successivement. Selon une réalisation, la table TSD fonctionne comme une pile FIFO. Les tirages aléatoires successifs dans le serveur de disponibilité SD sont indépendants les uns des autres et effectués en continu par le serveur de disponibilité, c'est-à-dire dès qu'un tirage est terminé le serveur de disponibilité SD recommence un autre tirage. La table TSD comprend un nombre prédéterminé d'identificateurs de serveur de traitement. Lorsque après un tirage aléatoire, le nombre d'identificateurs de la table TSD est égal au nombre prédéterminé d'identificateurs, le premier identificateur de la table TSD est supprimé et l'identificateur déterminé récemment par le tirage aléatoire est ajouté en fin de table. La génération de la table TSD est continue et le tirage aléatoire est pondéré par l'état de disponibilité ED.

Dans le deuxième exemple, l'état de disponibilité ED est absolu, et par conséquent indépendant des autres états de disponibilité, afin de ne pas avoir à déterminer tous les états de disponibilité à chaque nouvelle adjonction d'un serveur de traitement. Par exemple, un serveur de traitement dont la capacité de traitement est élevée a un état de disponibilité de 45 et un serveur de traitement dont la capacité de traitement est beaucoup moins élevée a un état de disponibilité de 5.

Dans une variante, le serveur de disponibilité SD ne considère pas lors des tirages aléatoires les serveurs de traitement dont l'état de disponibilité ED associé n'a pas été actualisé alors qu'il aurait dû l'être.

Dans une autre variante, après chaque tirage aléatoire, le serveur de disponibilité SD vérifie l'actualisation de l'état de disponibilité ED associé à l'identificateur IDST sélectionné par le tirage aléatoire. Lorsque l'état de disponibilité ED n'a pas été actualisé, alors qu'il aurait dû l'être, le tirage aléatoire est annulé.

Dans une autre variante, le serveur de disponibilité SD actualise les états de disponibilité ED qui auraient dû l'être.

La table de serveurs disponibles TSD sert à réguler et répartir le trafic dans les serveurs de traitement ST1 à STN en évitant de transmettre toutes les requêtes d'usager REQ au serveur de traitement le plus disponible, c'est-à-dire ayant le plus élevé état de disponibilité, ce qui aurait pour conséquence la saturation rapide de ce dernier serveur de traitement.

Le serveur de disponibilité SD consulte régulièrement la liste de serveurs de traitement LST dans le serveur SGDB pour que la table de serveurs disponibles TSD soit générée en fonction des changements des états de disponibilité ED des serveurs de traitement ayant pu survenir. L'actualisation de la liste de serveurs mémorisée LSTM est asynchrone par rapport à la réception d'une requête de disponibilité REQd. Par exemple la liste mémorisée LSTM est actualisée toutes les 10 secondes et la table TSD est générée au moins toutes les 3 secondes.

En variante, le serveur de disponibilité SD détermine une date d'actualisation de la liste mémorisée LSTM. La date d'actualisation de la liste mémorisée correspond à la date de la prochaine actualisation d'un état de disponibilité d'un serveur de traitement.

A la réception d'une requête de disponibilité REQd, le serveur de disponibilité SD sélectionne le premier identificateur de serveur de traitement IDST dans la table de serveurs disponibles TSD, puis transmet l'identificateur de serveur de traitement sélectionné à l'équipement d'aiguillage EA. Le serveur de disponibilité SD supprime le premier identificateur sélectionné de la table.

Dans une variante, la génération de la table TSD est synchrone au traitement d'une requête de disponibilité, c'est-à-dire que le serveur de disponibilité SD réalise un tirage aléatoire pondéré à chaque réception d'une requête de disponibilité REQd, ou à chaque réception d'une requête de disponibilité REQd toutes les M requêtes REQd, en provenance de l'équipement d'aiguillage EA. M est un entier au moins égal à 2.

Dans une autre variante, l'actualisation de la liste mémorisée de serveurs de traitement LSTM est synchrone par rapport à la réception de chaque requête de disponibilité REQd, ou par rapport à la réception d'une requête de disponibilité REQd toutes les K requêtes REQd. K est un entier au moins égal à 2 et est choisi afin de ne pas pénaliser le traitement de chaque requête de disponibilité et par conséquent le traitement de chaque requête d'usager REQ par le temps d'accès au serveur de gestion de base de données SGBD.

Ces deux dernières variantes peuvent être combinées entre elles.

Dans une variante, le système de sélection comprend plusieurs serveurs de disponibilité assignés respectivement à des ensembles de serveurs de traitement.

Par exemple, chaque ensemble de serveurs de traitement délivre un service spécifique. L'équipement d'aiguillage EA interroge le serveur de disponibilité SD affecté à l'ensemble de serveurs de traitement correspondant au service demandé par la requête d'usager REQ grâce à une table de correspondance entre des services et des serveurs de disponibilité.

Dans une autre variante, le système de sélection comprend plusieurs serveurs de disponibilité assignés à un ensemble de serveurs de traitement.

Par exemple, l'ensemble de serveurs de traitement délivre un unique service et l'équipement d'aiguillage EA interroge cycliquement l'un des serveurs de disponibilité de l'un des ensembles. Les requêtes de disponibilité REQd transmises par l'équipement d'aiguillage EA à un serveur de disponibilité SD étant toujours identiques, il n'est pas nécessaire de considérer la charge d'un serveur de disponibilité et une simple rotation cyclique du serveur de disponibilité à interroger suffit.

Dans une autre variante, le système de sélection comprend plusieurs équipements d'aiguillage EA assignés à un ensemble restreint de terminaux d'usager afin de limiter le nombre de terminaux d'usager susceptibles de communiquer avec un équipement d'aiguillage.

Les trois dernières variantes peuvent être combinées.

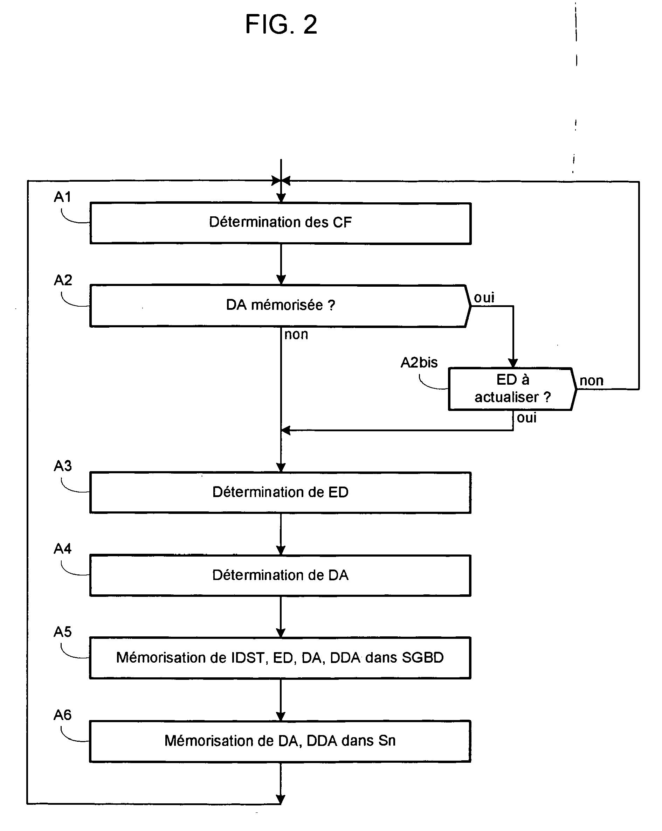

En référence à la figure 2, le **procédé asynchrone de détermination et d'actualisation** d'un état de disponibilité d'un serveur de traitement comprend des étapes A1 à A6.

Ce procédé est appliqué en continu par chaque sondeur associé à un serveur de traitement.

A l'étape A1, le sondeur Sn lit les caractéristiques de fonctionnement CF du serveur de traitement associé dans celui-ci.

A l'étape A2, un sondeur Sn associé à un serveur de traitement STn vérifie s'il a mémorisé une durée d'actualisation DA de l'état de disponibilité ED du serveur de traitement en association avec une date de dernière actualisation DDA. Lorsqu'aucune durée d'actualisation DA n'est mémorisée, le sondeur exécute immédiatement l'étape suivante A3 pour déterminer un état de disponibilité ED et par conséquent une première durée d'actualisation DA. Lorsqu'une durée d'actualisation est déjà mémorisée, le sondeur détermine en fonction de la durée d'actualisation DA, de la dernière date d'actualisation DDA et de la date courante si l'état de disponibilité ED doit être actualisé à l'étape A2bis. Lorsque l'état de disponibilité ED n'est pas à actualiser, le sondeur temporise et exécute l'étape A2, jusqu'à ce que la durée d'actualisation soit atteinte et par conséquent l'état de disponibilité ED à actualiser.

A l'étape A4, le sondeur détermine l'état de disponibilité ED du serveur de traitement. Puis, le sondeur détermine la durée d'actualisation DA de l'état de disponibilité déterminé ED à l'étape A5.

A l'étape A5, le sondeur Sn transmet l'état de disponibilité ED, la durée d'actualisation déterminée DA, et la date de cette dernière actualisation DDA en association à l'identificateur IDST du serveur de traitement STn, au serveur de gestion de base de données SGBD qui les mémorise.

A l'étape A6, le sondeur Sn mémorise la durée d'actualisation DA et la date de dernière actualisation DDA.

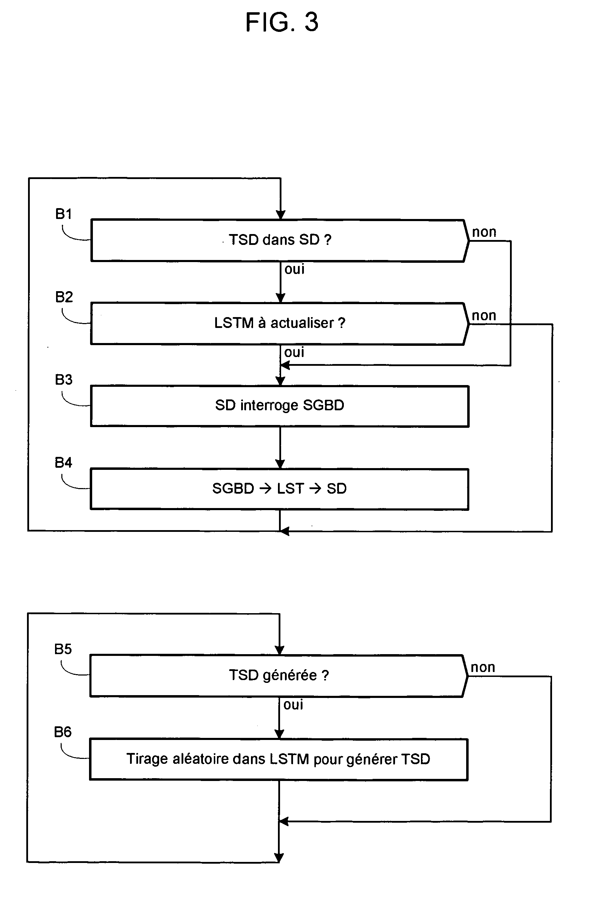

En référence à la figure 3, le **procédé asynchrone de génération d'une table de serveurs disponibles** TSD selon l'invention comprend des étapes B1 à B6.

Ce procédé vise à disposer d'une table d'identificateurs de serveur disponible à tout moment.

A l'étape B1, le serveur de disponibilité SD vérifie s'il a mémorisé une table de serveurs disponibles TSD. Lorsqu'aucune table TSD n'est mémorisée, le serveur de disponibilité SD exécute l'étape B3. Lorsqu'il a déjà mémorisé une table TSD, le serveur de disponibilité SD vérifie si la liste mémorisée de serveurs de traitement LSTM doit être actualisée à l'étape B2. Lorsque la liste LSTM n'est pas à actualiser, le serveur de disponibilité exécute l'étape B5. Lorsqu'aucune table TDS n'est mémorisée, le serveur de disponibilité SD charge une liste de serveurs de traitement LST depuis le serveur SGBD, mémorise cette liste LST, puis lorsque la liste mémorisée LSTM ainsi chargée est à actualiser, le serveur de disponibilité SD interroge le serveur SGBD à l'étape B3 afin que le serveur SGBD transmette au serveur de disponibilité la liste de serveur de traitement LST à l'étape B4.

Selon le premier exemple, à l'étape B5, le serveur de disponibilité SD aborde la génération de la table de serveurs disponibles TSD. Si la table TSD ne doit pas être générée, le procédé retourne à l'étape B1 puisque la périodicité de la génération de la table TSD est asynchrone de la périodicité de l'actualisation de la liste mémorisée LSTM en interrogeant le serveur de gestion de base de données SGBD. Si une période de génération de la table TSD expire, le générateur GT génère de nouveau la table TSD par tirage aléatoire d'identificateurs IDST en ledit nombre prédéterminé dans la dernière liste mémorisée et actualisée LSTM, à l'étape B6 qui est poursuivie par l'étape B5.

Selon le deuxième exemple, l'étape B5 n'existe pas et le serveur de disponibilité SD génère en continu la table TSD, en réalisant en permanence des tirages aléatoires successifs.

L'invention décrite ici concerne un procédé et un serveur SD pour générer une table de serveurs de traitement disponibles parmi un ensemble de serveurs de traitement afin qu'un équipement EA puisse communiquer des requêtes REQ de terminaux T à des serveurs de traitement disponibles à travers un réseau de télécommunications. Selon une implémentation préférée, les étapes du procédé de l'invention sont déterminées par les instructions d'un programme d'ordinateur incorporé dans un serveur, tel que le serveur de disponibilité SV. Le programme comporte des instructions de programme qui, lorsque ledit programme est chargé et exécuté dans ledit serveur de disponibilité, dont le fonctionnement est alors commandé par l'exécution du programme, réalisent les étapes du procédé selon l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage ou support d'enregistrement, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

## Revendications

1. - Procédé de génération d'une table de serveurs de traitement disponibles parmi un ensemble de serveurs de traitement (ST1 à STN) afin qu'un équipement (EA) puisse communiquer des requêtes (REQ) de terminaux (T) à des serveurs de traitement disponibles à travers un réseau de télécommunications (RT), **caractérisé en ce qu'**il comprend les étapes suivantes dans un serveur de disponibilité (SD):
une interrogation (B3) d'une base de données (SGBD) afin d'actualiser une liste mémorisée de serveurs de traitement (LSTM) comprenant notamment au moins un état de disponibilité (ED) d'un serveur de traitement associé à un identificateur de serveur de traitement (IDST), et
une sélection (B6) d'au moins un identificateur (IDST) dans la liste (LSTM) afin de générer la table de serveurs disponibles (TSD) comprenant au moins un identificateur identifiant un serveur de traitement disponible auquel l'équipement (EA) communique les requêtes (REQ).

2. - Procédé conforme à la revendication 1, selon lequel la sélection d'au moins un identificateur (IDST) dans la liste (LSTM) est réalisée par au moins un tirage aléatoire d'au moins un identificateur dans la liste (LSTM), pondérés par les états de disponibilité (ED) associés aux identificateurs (IDST).

3. - Procédé conforme à la revendication 2, selon lequel les identificateurs de serveur de traitement (IDST) tirés aléatoirement sont classés dans la table de serveurs disponibles (TSD) par différences croissantes entre les états de disponibilité associés et une valeur prédéterminée afin que l'équipement (EA) communique les requêtes (REQ) successivement aux serveurs de traitement disponibles selon leurs identificateurs classés.

4. - Procédé conforme à l'une quelconque des revendications 1 à 3, selon lequel la table de serveurs disponibles (TSD) est en outre générée lorsque la liste mémorisée des serveurs de traitement (LSTM) est actualisée.

5. - Procédé conforme à l'une quelconque des revendications 1 à 4, selon lequel l'état de disponibilité (ED) d'un serveur de traitement (ST) est déterminé selon des caractéristiques de fonctionnement (CF) du serveur de traitement.

6. - Procédé conforme à la revendication 5, selon lequel un sondeur (S1 à SN) est associé à un serveur de traitement (ST1 à STN), détermine l'état de disponibilité (ED) en fonction des caractéristiques de fonctionnement du serveur de traitement et transmet à la base de données (SGBD) l'état de disponibilité déterminé du serveur de traitement.

7. - Procédé conforme à l'une quelconque des revendications 1 à 6, selon lequel l'état de disponibilité d'un serveur de traitement est actualisé en fonction d'une durée d'actualisation (DA) déterminée selon des critères d'actualisation du serveur de traitement.

8. - Procédé conforme à la revendication 7, selon lequel la liste mémorisée des serveurs de traitement (LSTM) est actualisée selon une date d'actualisation correspondant à la date de la prochaine actualisation de l'état de disponibilité de l'un des serveurs de traitement, déduite de la durée d'actualisation prédéterminée (DA) dudit serveur de traitement.

9. - Serveur de disponibilité (SD) pour générer une table de serveurs de traitement disponibles parmi un ensemble de serveurs de traitement (ST1 à STN) afin qu'un équipement (EA) puisse communiquer des requêtes (REQ) de terminaux (T) à des serveurs de traitement disponibles à travers un réseau de télécommunications (RT), **caractérisé en ce qu'**il comprend :
un moyen (MI) pour interroger (B3) une base de données (SGBD) afin d'actualiser une liste mémorisée de serveurs de traitement (LSTM) comprenant notamment au moins un état de disponibilité (ED) d'un serveur de traitement associé à un identificateur de serveur de traitement (IDST), et
un moyen (MG) pour sélectionner au moins un identificateur (IDST) dans la liste mémorisée (LSTM) afin qu'un moyen pour générer (MG) génère la table de serveurs disponibles (TSD) comprenant au moins un identificateur identifiant un serveur de traitement disponible auquel l'équipement (EA) communique les requêtes (REQ).

10. - Serveur de disponibilité conforme à la revendication 9, selon lequel le moyen pour sélectionner réalise au moins un tirage aléatoire d'au moins un identificateur dans la liste, pondéré par les états de disponibilité associés aux identificateurs.

11. - Programme d'ordinateur apte à être mis en oeuvre dans un serveur de disponibilité (SD) pour générer une table de serveurs de traitement disponibles parmi un ensemble de serveurs de traitement (ST1 à STN) afin qu'un équipement (EA) puisse communiquer des requêtes (REQ) de terminaux (T) à des serveurs de traitement disponibles à travers un réseau de télécommunications (RT), ledit programme comprenant des instructions qui, lorsque le programme est chargé et exécuté dans ledit serveur de disponibilité, réalisent les étapes de:
interroger (B3) une base de données (SGBD) afin d'actualiser une liste mémorisée de serveurs de traitement (LSTM) comprenant notamment des états de disponibilité (ED) des serveurs de traitement associés respectivement à des identificateurs de serveur de traitement (IDST), et
une sélection (B6) d'au moins un identificateur (IDST) dans la liste (LSTM) afin de générer la table de serveurs disponibles (TSD) comprenant des identificateurs identifiant des serveurs de traitement disponibles auxquels l'équipement (EA) communique les requêtes (REQ).

## Claims

1. Method for generating a table of available processing servers from among a set of processing servers (ST1 to STN) so that an equipment (EA) can communicate requests (REQ) from terminals (T) to available processing servers through a telecommunications network (RT), **characterized in that** it comprises the following steps in an availability server (SD):
interrogating (B3) a database (SGBD) so as to update a stored list of processing servers (LSTM) comprising in particular at least one availability state (ED) of a processing server associated with a processing server identifier (IDST), and
selecting (B6) at least one identifier (IDST) from the list (LSTM) so as to generate the table of available servers (TSD) comprising at least one identifier identifying an available processing server to which the equipment (EA) communicates the requests (REQ).

2. Method in accordance with Claim 1, according to which the selecting of at least one identifier (IDST) from the list (LSTM) is carried out by at least one random drawing of at least one identifier from the list (LSTM), weighted by the availability states (ED) associated with the identifiers (IDST).

3. Method in accordance with Claim 2, according to which the randomly drawn processing server identifiers (IDST) are ranked in the table of available servers (TSD) by increasing differences between the associated availability states and a predetermined value so that the item of equipment (EA) communicates the requests (REQ) successively to the available processing servers according to their ranked identifiers.

4. Method in accordance with any one of Claims 1 to 3, according to which the table of available servers (TSD) is furthermore generated when the stored list of processing servers (LSTM) is updated.

5. Method in accordance with any one of Claims 1 to 4, according to which the availability state (ED) of a processing server (ST) is determined according to operating characteristics (CF) of the processing server.

6. Method in accordance with Claim 5, according to which a sounder (S1 to SN) is associated with a processing server (ST1 to STN), determines the availability state (ED) as a function of the operating characteristics of the processing server and transmits the determined availability state of the processing server to the database (SGBD).

7. Method in accordance with any one of Claims 1 to 6, according to which the availability state of a processing server is updated as a function of an update duration (DA) determined according to update criteria for the processing server.

8. Method in accordance with Claim 7, according to which the stored list of processing servers (LSTM) is updated according to an update date corresponding to the date of the next update of the availability state of one of the processing servers, deduced from the predetermined update duration (DA) of said processing server.

9. Availability server (SD) for generating a table of available processing servers from among a set of processing servers (ST1 to STN) so that an item of equipment (EA) can communicate requests (REQ) from terminals (T) to available processing servers through a telecommunications network (RT), **characterized in that** it comprises:
a means (MI) for interrogating (B3) a database (SGBD) so as to update a stored list of processing servers (LSTM) comprising in particular at least one availability state (ED) of a processing server associated with a processing server identifier (IDST), and
a means (MG) for selecting at least one identifier (IDST) from the stored list (LSTM) so that a means for generating (MG) generates the table of available servers (TSD) comprising at least one identifier identifying an available processing server to which the item of equipment (EA) communicates the requests (REQ).

10. Availability server in accordance with Claim 9, according to which the means for selecting carries out at least one random drawing of at least one identifier from the list, weighted by the availability states associated with the identifiers.

11. Computer program able to be implemented in an availability server (SD) for generating a table of available processing servers from among a set of processing servers (ST1 to STN) so that an item of equipment (EA) can communicate requests (REQ) from terminals (T) to available processing servers through a telecommunications network (RT), said program comprising instructions which, when the program is loaded and executed in said availability server, carry out the steps of:
interrogating (B3) a database (SGBD) so as to update a stored list of processing servers (LSTM) comprising in particular availability states (ED) of the processing servers associated respectively with processing server identifiers (IDST), and
selecting (B6) at least one identifier (IDST) from the list (LSTM) so as to generate the table of available servers (TSD) comprising identifiers identifying available processing servers to which the item of equipment (EA) communicates the requests (REQ).

## Patentansprüche

1. Verfahren zur Erzeugung einer Tabelle von verfügbaren Verarbeitungsservern aus einer Gruppe von Verarbeitungsservern (ST1 bis STN), damit ein Gerät (EA) Anforderungen (REQ) von Endgeräten (T) über ein Telekommunikationsnetz (RT) an verfügbare Verarbeitungsserver übermitteln kann, **dadurch gekennzeichnet, dass** es die folgenden Schritte in einem Verfügbarkeitsserver (SD) aufweist:
eine Abfrage (B3) einer Datenbank (SGBD), um eine gespeicherte Liste von Verarbeitungsservern (LSTM) zu aktualisieren, die insbesondere mindestens einen Verfügbarkeitszustand (ED) eines Verarbeitungsservers enthält, der einem Verarbeitungsserver-Identifikator (IDST) zugeordnet ist, und
eine Auswahl (B6) mindestens eines Identifikators (IDST) aus der Liste (LSTM), um die Tabelle von verfügbaren Servern (TSD) zu erzeugen, die mindestens einen Identifikator aufweist, der einen verfügbaren Verarbeitungsserver identifiziert, an den das Gerät (EA) die Anforderungen (REQ) übermittelt.

2. Verfahren nach Anspruch 1, gemäß dem die Auswahl mindestens eines Identifikators (IDST) aus der Liste (LSTM) durch mindestens eine Zufallsziehung mindestens eines Identifikators aus der Liste (LSTM) erfolgt, gewichtet durch die den Identifikatoren (IDST) zugeordneten Verfügbarkeitszustände (ED).

3. Verfahren nach Anspruch 2, gemäß dem die zufällig gezogenen Verarbeitungsserver-Identifikatoren (IDST) in der Tabelle von verfügbaren Servern (TSD) durch zunehmende Unterschiede zwischen den zugeordneten Verfügbarkeitszuständen und einen vorbestimmten Wert eingeordnet werden, damit das Gerät (EA) die Anforderungen (REQ) an die verfügbaren Verarbeitungsserver nacheinander entsprechend ihren eingeordneten Identifikatoren übermittelt.

4. Verfahren nach einem der Ansprüche 1 bis 3, gemäß dem die Tabelle von verfügbaren Servern (TSD) außerdem erzeugt wird, wenn die gespeicherte Liste der Verarbeitungsserver (LSTM) aktualisiert wird.

5. Verfahren nach einem der Ansprüche 1 bis 4, gemäß dem der Verfügbarkeitszustand (ED) eines Verarbeitungsservers (ST) gemäß Betriebsmerkmalen (CF) des Verarbeitungsservers bestimmt wird.

6. Verfahren nach Anspruch 5, gemäß dem eine Prüfsonde (S1 bis SN) einem Verarbeitungsserver (ST1 bis STN) zugeordnet wird, den Verfügbarkeitszustand (ED) in Abhängigkeit von den Betriebsmerkmalen des Verarbeitungsservers bestimmt und an die Datenbank (SGBD) den bestimmten Verfügbarkeitszustand des Verarbeitungsservers überträgt.

7. Verfahren nach einem der Ansprüche 1 bis 6, gemäß dem der Verfügbarkeitszustand eines Verarbeitungsservers in Abhängigkeit von einer Aktualisierungsdauer (DA) aktualisiert wird, die gemäß Aktualisierungskriterien des Verarbeitungsservers bestimmt wird.

8. Verfahren nach Anspruch 7, gemäß dem die gespeicherte Liste der Verarbeitungsserver (LSTM) gemäß einem Aktualisierungsdatum aktualisiert wird, das dem Datum der nächsten Aktualisierung des Verfügbarkeitszustands eines der Verarbeitungsserver entspricht, abgeleitet von der vorbestimmten Aktualisierungsdauer (DA) des Verarbeitungsservers.

9. Verfügbarkeitsserver (SD) zur Erzeugung einer Tabelle von verfügbaren Verarbeitungsservern aus einer Gruppe von Verarbeitungsservern (ST1 bis STN), damit ein Gerät (EA) Anforderungen (REQ) von Endgeräten (T) über ein Telekommunikationsnetz (RT) an verfügbare Verarbeitungsserver übermitteln kann, **dadurch gekennzeichnet, dass** er aufweist:
ein Mittel (MI), um eine Datenbank (SGBD) abzufragen (B3), um eine gespeicherte Liste von Verarbeitungsservern (LSTM) zu aktualisieren, die insbesondere mindestens einen Verfügbarkeitszustand (ED) eines Verarbeitungsservers aufweist, der einem Verarbeitungsserver-Identifikator (IDST) zugeordnet ist, und
ein Mittel (MG), um mindestens einen Identifikator (IDST) aus der gespeicherten Liste (LSTM) auszuwählen, damit ein Erzeugungsmittel (MG) die Tabelle von verfügbaren Servern (TSD) erzeugt, die mindestens einen Identifikator aufweist, der einen verfügbaren Verarbeitungsserver identifiziert, an den das Gerät (EA) die Anforderungen (REQ) übermittelt.

10. Verfügbarkeitsserver nach Anspruch 9, gemäß dem das Auswahlmittel mindestens eine Zufallsziehung mindestens eines Identifikators aus der Liste durchführt, gewichtet durch die den Identifikatoren zugeordneten Verfügbarkeitszustände.

11. Computerprogramm, das in einem Verfügbarkeitsserver (SD) angewendet werden kann, um eine Tabelle von verfügbaren Verarbeitungsservern aus einer Gruppe von Verarbeitungsservern (ST1 bis STN) zu erzeugen, damit ein Gerät (EA) Anforderungen (REQ) von Endgeräten (T) über ein Telekommunikationsnetz (RT) an verfügbare Verarbeitungsserver übermitteln kann, wobei das Programm Anweisungen enthält, die, wenn das Programm geladen und in dem Verfügbarkeitsserver ausgeführt wird, die folgenden Schritte durchführen:
Abfrage (B3) einer Datenbank (SGBD), um eine gespeicherte Liste von Verarbeitungsservern (LSTM) zu aktualisieren, die insbesondere Verfügbarkeitszustände (ED) der Verarbeitungsserver aufweist, die je Verarbeitungsserver-Identifikatoren (IDST) zugeordnet sind, und
eine Auswahl (B6) mindestens eines Identifikators (IDST) aus der Liste (LSTM), um die Tabelle von verfügbaren Servern (TSD) zu erzeugen, die Identifikatoren enthält, die verfügbare Verarbeitungsserver identifizieren, an die das Gerät (EA) die Anforderungen übermittelt (REQ).
